# EUROPEAN PATENT APPLICATION

(11) **EP 4 439 463 A1**
(43) Date of publication of application: **02.10.2024**
(21) Application number: 23165358.5
(22) Date of filing: 30.03.2023
(51) Int. Cl.: G06T 7/73

(54) **METHOD FOR USE IN POSITIONING AN ANATOMY OF INTEREST FOR X-RAY IMAGING**

(71) Applicant: Koninklijke Philips N.V., 5656 AG Eindhoven (NL)
(72) Inventor: BRUECK, Heiner Matthias, Eindhoven (NL); KROENKE-HILLE, Sven, Eindhoven (NL); BYSTROV, Daniel, 5656AG Eindhoven (NL); HARDER, Tim Philipp, Eindhoven (NL); VON BERG, Jens, Eindhoven (NL); GOOßEN, Andre, Eindhoven (NL); YOUNG, Stewart Matthew, Eindhoven (NL)
(74) Representative: Philips Intellectual Property & Standards

(57) **Abstract**

Disclosed is a method for use in positioning an anatomy of interest for X-ray imaging, the method comprising obtaining 3D surface image data of an anatomy of interest prior to X-ray imaging; generating a 3D scene of a surface of the anatomy of interest from the 3D surface image data; determining a pose of the anatomy of interest from the 3D scene; and causing an output of a visual representation of the pose on a display device.

## Description

### FIELD OF THE INVENTION

The invention provides a computer-implemented method for use in positioning an anatomy of interest for X-ray imaging, a method for positioning an anatomy of interest, a data processing system, an X-ray system comprising the data processing system, a computer program product, and a computer readable medium.

### BACKGROUND OF THE INVENTION

In order to improve X-ray imaging, a proper positioning of an anatomy of interest, for example a body part, for the X-ray imaging is important. Specifically, the pose of the anatomy of interest is relevant for the imaging.

Proper positioning prior to X-ray imaging allows, among others, for dose reduction, shortened procedure time, and reducing deterioration of equipment, which occur if pose is determined only after taking the X-ray image and it is determined that repositioning and re-taking the X-ray image is required for achieving the desired quality of the X-ray image.

For example, positioning the anatomy of interest may be done by a user like a clinical practitioner, e.g. a clinical technician, a nurse, or a doctor. Support methods and systems may be provided to aid the clinical technician to accurately position the anatomy of interest, as deriving the pose may not be possible by a clinical technician looking at the anatomy of interest.

However, present support methods and systems often lack accuracy, for example, could only provide accurate results in hypothetical ideal scenarios that cannot be replicated in reality.

It is, thus, an object of the present invention to allow for improved positioning of an anatomy of interest.

### SUMMARY OF THE INVENTION

The invention provides a method for use in positioning an anatomy of interest for X-ray imaging, a method for positioning an anatomy of interest, a data processing system, an X-ray system comprising the data processing system, a computer program product, and a computer readable medium.

Specifically, a computer-implemented method for use in positioning an anatomy of interest for X-ray imaging is provided, the method comprising obtaining 3D surface image data of an anatomy of interest prior to X-ray imaging, generating a 3D scene of a surface of the anatomy of interest from the 3D surface image data, determining a pose of the anatomy of interest from the 3D scene, and causing an output of a visual representation of the pose on a display device.

The present invention addresses the above object by improving accuracy of pose determination as compared to known methods and systems. By improving accuracy of pose determination, the positioning of the anatomy of interest in a target pose is improved, as it can be better verified whether the target pose has been achieved and corrections to achieve the target pose can be made in a purposive manner.

Generating a 3D scene for determining a pose, as proposed by the present disclosure, yields said improved accuracy, as the 3D scene provides more complete information that other methods currently used. As an example, using a 3D scene allows for mitigating effects that might otherwise decrease accuracy, for example, where portions of the surface of an anatomy are obscured.

The visual representation of the pose being output on a display device supports a user, for example a clinical technician, when positioning the anatomy of interest for X-ray imaging. Specifically, it assists the user in performing the technical task of accurate positioning for X-ray acquisition by means of a continued and guided human-machine interaction process.

Merely as an example, a target pose and an actual pose might be visualized, e.g. side-by-side or as an overlay, such that the clinical technician has immediate feedback as to whether the anatomy of interest has the target pose. The claimed method, thus, allows for yielding improved positioning of the anatomy of interest.

In the present disclosure, the term anatomy of interest for X-ray imaging is to be understood broadly and may refer to a portion or portions of a body to be imaged during X-ray imaging. As an example, this may entail one or more body parts, e.g. comprising joints and/or limbs. Examples comprise but are not limited to a knee, an ankle, a wrist, an elbow. or the like.

In the present disclosure, the term "for use in positioning" expresses that the method as such does not need to comprise steps of actually moving the anatomy of interest to change its position. It may, accordingly, be understood as a support method for supporting positioning the anatomy of interest. As an example, the method may at least precede, e.g., be carried out in preparation for, moving the anatomy of interest to change its position. The method may also be carried out in-between steps of moving the anatomy of interest to change its position. The method may also be carried out during or after moving the anatomy of interest to change its position, e.g., as part of a monitoring and/or tracking.

In the present disclosure, obtaining 3D surface image data prior to X-ray imaging may be understood as obtaining 3D surface image data at least prior to X-ray imaging. That is, the method may also comprise obtaining (additional) 3D surface image data during the X-ray imaging and carrying out the remaining steps of the method of the present disclosure using the 3D surface image data obtained during the X-ray imaging.

In the present disclosure, obtaining 3D surface image data may entail a computing system receiving, directly or indirectly from one or more 3D surface imaging devices, 3D surface image data captured by the 3D surface imaging devices and/or receiving and processing data captured by one or more imaging devices to obtain 3D surface image data. For example, processing of raw data captured by imaging devices may be carried out at the respective imaging device or at least in part by the computing system.

According to the present disclosure, generating a 3D scene of a surface of the anatomy of interest from the 3D surface image data may comprise using the 3D surface image data as an input for a 3D scene generation method. Known methods for 3D scene generation may be employed. The 3D scene generation will also be described in more detail below.

3D scene reconstruction may be understood as the process of creating a digital 3D model of a real-world scene or object. 3D scene reconstruction may be understood as an exemplary method used in the field of computer vision. 3D scene reconstruction may recover the underlying 3D geometry and texture of the scene, for example including one or more of the position and orientation of objects, the shape of surfaces, and the material properties of the objects. 3D scene reconstruction may, for example, make use of image processing, computer graphics, and machine learning algorithms that can extract and match visual features across multiple images.

In general, 3D scene reconstruction may utilize multiple sets of 3D surface image data, for example from multiple distances and/or viewing directions and/or points in time to generate the 3D scene.

Thus, a 3D scene may comprise 3D surface image data that would not be derivable from one set of 3D surface image data (e.g., from one distance, viewing direction, and point in time). Specifically, a 3D scene may comprise 3D surface image data for otherwise obscured surface portions, otherwise referring to, for example, a single set of 3D surface image data.

According to the present disclosure, determining a pose of the anatomy of interest from the 3D scene may comprise using the 3D scene as an input for a pose determination method or a data processing method preceding the pose determination method. As an example, the 3D scene may be used to obtain a 3D model of portions of the anatomy of interest, e.g. a 3D surface model and/or a 3D model of underlying internal structures of the anatomy of interest, e.g. bones and/or joints, or the like, and pose may be determined from the 3D model or models. Known methods for determining pose from 3D models may be employed.

A pose according to the present disclosure, may comprise data representative of how different portions of the anatomy of interest are positioned relative to each other and/or relative to one or more components of an X-ray imaging device, e.g., relative to an X-ray tube, an X-ray detector, and/or a patient table.

Positioning of the anatomy of interest may entail one or more steps of moving the anatomy of interest to change its position, for example, such movements may entail one or more rotations and/or one or more translatory movements of at least part of the anatomy of interest. Parts of the anatomy of interest may be moved together and/or relative to each other. As an example, moving may comprise moving a part of the anatomy of interest relative to another one, e.g., flexing a foot relative to the shin. Alternatively or in addition, the entire anatomy of interest may be shifted and/or rotated together.

The positioning may be monitored by repeatedly or continuously obtaining 3D surface image data, generating a 3D scene, and determining pose, e.g., as disclosed herein.

According to the present disclosure, obtaining the 3D surface image data may comprise obtaining 3D surface image data for a plurality of different viewing directions. Generating the 3D scene may comprise aggregating the 3D surface image data for the plurality of viewing directions.

In particular, the plurality of different viewing directions may comprise viewing directions that each yield 3D surface image data, wherein the 3D surface image data of one of the viewing directions comprises 3D surface image data missing in the 3D surface image data of the other viewing direction. In other words, the 3D surface image data of one of the viewing directions comprises 3D surface image data of surface portions obstructed from view in the other viewing direction, for example obstructed by a body part or system components.

In particular, the plurality of viewing directions may comprise viewing directions that together yield 3D surface image data having a full coverage of observable surfaces of the anatomy of interest, e.g., at least for the top and sides of the anatomy of interest. The bottom of the anatomy of interest may not be observable, for example, when the anatomy of interest rests on a surface that blocks the bottom side from view.

As will be readily understood, using mutually different viewing directions allows for building an improved scene, e.g., having higher coverage, and, thereby, yields improved accuracy for determining pose. Merely as an example, a view from the side of a leg may allow for very accurate determination of flexion of the foot, but potentially a less accurate determination of a sideways rotation of a foot.

In the following, examples according to the present disclosure for obtaining 3D surface image data from different viewing directions will be provided.

According to the present disclosure, obtaining 3D surface image data for a plurality of viewing directions may comprise capturing 3D surface image data by means of a plurality of 3D surface imaging devices having mutually different viewing directions. At least some of the imaging devices may be fixed-position imaging devices fixed in such positions as to have different viewing directions, e.g., fixed to a wall and/or ceiling.

Alternatively or in addition, obtaining 3D surface image data for a plurality of viewing directions may comprise capturing 3D surface image data by means of a single 3D surface imaging device or multiple 3D surface imaging devices, wherein the method comprises prompting the single 3D surface imaging device or at least one of the multiple 3D surface imaging devices to move and capture image data from a plurality of viewing directions. As an example, one of the imaging devices may be a fixed-position imaging device, e.g., fixed to a wall or ceiling, and another one of the imaging devices may be movable, for example so as to change its viewing direction from a fixed position or so as move along a predetermined trajectory. Alternatively, only a single 3D surface imaging device movable, for example so as to change its viewing direction without translatory movement or by moving along a predetermined trajectory, may be employed. In order to obtain 3D surface image data for a plurality of viewing directions, the method may comprise prompting the movable 3D surface imaging device to move and capture image data from a plurality of viewing directions.

It is to be understood that capturing image data from different viewing directions may entail sequentially capturing image data from different viewing directions, e.g., by a movable imaging device, and/or concurrently capturing image data by means of two different imaging devices having different viewing directions.

That is, image data may be captured from a plurality of viewing directions which can be acquired sequentially or simultaneously.

A 3D surface imaging device according to the present disclosure may, for example, be a depth camera, but other 3D surface imaging devices may also be employed.

According to the present disclosure, obtaining 3D surface image data of the anatomy of interest prior to X-ray imaging may comprise obtaining surface image data of the anatomy of interest from a first viewing direction and from at least one second viewing direction. The surface image data obtained from the second viewing direction may comprise surface image data of a portion of the anatomy of interest that is occluded when viewed from the first viewing direction.

A portion of the anatomy of interest being occluded from a viewing direction is also referred to herein as a portion of the anatomy being obstructed from view when viewed from the viewing direction. A portion of the anatomy of interest being occluded may entail that the anatomy of interest itself and/or another body part and/or equipment, particularly components of the X-ray imaging system, occlude the portion of the anatomy of interest.

As an example, when viewing a limb from an oblique angle, e.g. from a top-left direction, at least the lower right side of the limb will be occluded by the limb itself. As another example, when viewing a leg along a longitudinal direction thereof from the foot-side with a flexed foot, portions of the leg will be occluded by the foot.

According to the present disclosure, generating the 3D scene of the surface of the anatomy of interest from the 3D surface image data may leverage deep learning 3D scene reconstruction, in particular based on photogrammetry.
This is particularly advantageous for creating 3D scenes from a large number of viewing directions and/or for complex cases, e.g., where the position and orientation of the imaging devices relative to the anatomy of interest are not precisely known. Known deep-learning algorithms may be used for 3D scene reconstruction.

According to the present disclosure, determining the pose of the anatomy of interest from the 3D scene may comprise aligning a, particularly dynamic, 3D anatomical model of at least part of a skeleton with the 3D scene of the surface of the anatomy of interest and, based thereon, inferring the pose.

Aligning the 3D anatomical model with the 3D scene may comprise, as an example, creating a 3D anatomical model of at least part of the skeleton using the 3D scene and aligning the created 3D anatomical model with the, particularly dynamic, 3D anatomical model. Alternatively, aligning the 3D anatomical model with the 3D scene may comprise that the, particularly dynamic, 3D anatomical model is used to create a 3D scene and aligning the created 3D scene with the 3D scene obtained from the 3D surface image data. As yet another alternative, the aligning may comprise a landmark-based alignment, wherein, for example, anatomical landmarks are identified in the 3D scene and used for aligning the 3D scene with the 3D anatomical model. As yet another alternative, the aligning may comprise a marker-based alignment, wherein, for example, markers are identified in the 3D scene and used for aligning the 3D scene with the 3D anatomical model.

Determining the pose of the anatomy of interest from the 3D scene may, alternatively or in addition, comprise aligning a, particularly dynamic, 3D anatomical model of the surface of the anatomy of interest with the 3D scene of the surface of the anatomy of interest or a 3D anatomical model of the surface of the anatomy of interest derived from the 3D scene, and, based thereon, determining the pose. For example, a 3D anatomical model may be a 3D anatomical model obtained for the specific patient in advance or may be a generic 3D anatomical model, optionally modified to be representative of the specific patient.

According to the present disclosure, determining the pose may be performed taking into account an arrangement of the surface of the anatomy of interest relative to the arrangement of the X-ray tube head and/or relative to the arrangement of the detector and/or relative to the arrangement of the patient couch. Optionally, the arrangement(s) may be determined based on image data captured together with the 3D surface image data of the anatomy of interest.

As an example, the 3D surface image data and/or the 3D scene may depict the anatomy of interest as well as at least parts of the X-ray tube head, detector, and/or patient couch. The X-ray tube head, detector, and/or patient couch and/or a relative arrangement of an anatomy of interest with respect to the X-ray tube head, detector, and/or patient couch may be identified in the image data based on characteristic shapes and/or colors of the X-ray tube head, detector, and/or patient couch and/or may be identified in the image data based on reference markings on the X-ray tube head, detector, and/or patient couch.

According to the present disclosure, determining the pose may comprise using fiducial markers and/or using other aids supporting identification of anatomical landmarks in the 3D surface image data. For example, determining the pose may comprise using visual aids supporting identification of anatomical landmarks in the 3D surface image data.

As explained above, identification of anatomical landmarks allows for using the anatomical landmarks for aligning the 3D scene or a 3D surface model derived therefrom with a reference anatomical surface model or a reference anatomical model of a skeleton.

According to the present disclosure, determining the pose may be performed taking into account a previously obtained 3D surface model of the anatomy of interest, particularly a dynamic 3D surface model. As explained above, a previously obtained surface model may serve as a reference model and a 3D surface model derived from the 3D scene may be aligned with the reference model so as to determine the pose. The previously obtained 3D surface model of the anatomy of interest may be a 3D anatomical model obtained for the specific patient in advance or may be a generic 3D anatomical model, optionally modified to be representative of the specific patient.

According to the present disclosure, generating the 3D scene may comprise synthesizing image data representative of the 3D scene. A display device may be prompted to render/display the synthesized image data representative of the 3D scene, e.g., to support a user, e.g. a clinical practitioner, during positioning an anatomy of interest.

According to the present disclosure, the visual representation of the pose image data may comprise a synthetic X-ray image generated from a generic 3D bone model based on the pose. A synthetic X-ray image is to be understood as an artificial pre-view image showing a representation of at least some, particularly all of the anatomical structures that would be visible in an actual X-ray image. As such, particularly where it is necessary to reproduce X-ray images between X-ray sessions with high-precision positioning, quality can be improved. In particular, an overlay or side-by-side view of the synthetic X-ray image with previously obtained actual X-ray images of the patient may be provided so as to ensure proper positioning.

According to the present disclosure, obtaining 3D surface image data may comprise capturing 3D surface image data by means of an imaging device attached to an X-ray tube head or being an onboard camera of an X-ray tube head, particularly a movable imaging device movable together with the X-ray tube head.

Alternatively or in addition, obtaining 3D surface image data may comprise capturing 3D surface image data by means of an imaging device attached to an X-ray detector or being an onboard camera of an X-ray detector.

An advantage of such arrangements is that the position and viewing direction of the imaging devices are well-defined, reducing computational load and complexity and potential error-sources.

As outlined above, obtaining 3D surface image data may comprise capturing 3D surface image data by means of a movable imaging device. A movable image device is advantageous as it allows for high flexibility in terms of viewing direction and allows for carrying out the claimed method without any additional viewing directions, as a single imaging device may provide multiple viewing directions. Obtaining 3D surface image data may comprise capturing 3D surface image data by means of a fixed-position imaging device, particularly being in a fixed position relative to a room, a patient couch, or a user, e.g. a clinical practitioner, carrying out the positioning. An advantage of such arrangements is that the position and viewing direction of the imaging devices are well-defined, reducing computational load and complexity and potential error-sources. A fixed-position imaging device may be used together with one or more additional imaging devices comprising fixed-position or movable imaging devices to obtain multiple viewing directions.

Obtaining 3D surface image data may comprise capturing 3D surface image data for different poses of the anatomy of interest to obtain multiple views thereof. As an example, where modelling of the surface of the anatomy of interest is to be carried out, it may be useful to obtain surface image data that may later be used for resolving uncertainties and/or filling gaps in the model used for determining the pose.

According to the present disclosure, the steps of obtaining the 3D surface image data, generating the 3D scene, determining the pose, and causing the output may be carried out, particularly continuously, prior to and/or during positioning of the anatomy of interest. That is, the pose may be tracked, which allows for seamless correction of the pose and positioning and for monitoring the pose to determine changes in pose that might require correction, e.g., re-positioning of the anatomy of interest.

Alternatively or in addition, the steps of obtaining the 3D surface image data, generating the 3D scene, determining the pose, and causing the output may be repeated during X-ray imaging, particularly continuously or repeatedly. Thus, the pose immediately prior to or at the time of capturing the X-ray image(s) may be known precisely. This may allow for interrupting the X-ray imaging if the pose is no longer appropriate and may also be used for data processing of the X-ray image data, as the pose provides additional information that may be leveraged when analyzing the X-ray image data.

The present disclosure also provides a method for positioning an anatomy of interest for X-ray imaging, the method comprising any of the methods for use in positioning, e.g. automatically or by a user, e.g. a clinical practitioner, an anatomy of interest according to the present disclosure, and further comprising a user positioning the anatomy of interest for X-ray imaging based on the output of the visual representation of the pose.

The positioning of the anatomy may be carried out by a user / person, e.g. a clinical practitioner, guided by the output of the visual representation, or at least in part automatically, e.g., by means of a movable couch. As an example, the visual representation of the pose may be a projected synthetic X-ray image representative of the current pose or may be a rendering of a bone model or a rendering of a surface model representative of the current pose, and the visual representation of the pose may be output side-by-side or overlaid with renderings of a synthetic X-ray image, a rendering of a bone model, or a rendering of a surface model in a target pose. In case of tracking or monitoring the pose by repeatedly, particularly continuously, determining and outputting the visual representation of the pose, a guided iterative correction of the pose may be carried out.

The present disclosure also provides a data processing system for use in positioning an anatomy of interest for X-ray imaging, the data processing system configured to carry out and/or control the steps of any of the methods for use in positioning an anatomy of interest of the present disclosure.

In particular, the data processing system may be configured to carry out one or more, in particular all, of the computing steps of the present disclosure and/or to control capturing the 3D surface image data, for example, by controlling one or more imaging devices configured to capture the 3D surface image data. Optionally, the data processing system may be configured to control X-ray imaging, for example, by controlling an X-ray system, particularly an X-ray imaging device having an X-ray source and an X-ray detector.

The data processing system may comprise one or more processors, in particular one or more computing devices and/or a distributed network of computing devices comprising the one or more processors, and the one or more processors may be configured to carry out and/or control the steps of the methods of the present disclosure.

The present disclosure also provides an X-ray system comprising the data processing system of the present disclosure and further comprising one or more imaging devices configured to capture the 3D surface image data, in particular at least one depth camera configured to capture the 3D surface image data. The X-ray system may optionally comprise an X-ray imaging device having an X-ray source and an X-ray detector.

At least one imaging device, e.g. at least one depth camera, of the system may be a fixed-position imaging device, for example fixed relative to a room, a patient table, a user, e.g. a clinical practitioner, or the like. In addition to the fixed-position imaging device, the system may comprise a second fixed-position imaging device, the fixed-position imaging devices having mutually different viewing directions. Fixed-position imaging devices allow for reducing computational requirements, as their viewing direction and position need not be tracked or determined during the positioning.

Alternatively or in addition to a fixed-position imaging device, the system may comprise a movable imaging device, e.g., a movable depth camera. This allows for obtaining multiple viewing directions with only one imaging device. The movable imaging device may be independently movable, i.e., movable independently of the components of the X-ray imaging device. In particular, it may be robot-based. Independently movable imaging devices allow for maximum flexibility and may provide best coverage and least occlusion in the 3D scene. The movable imaging device may, alternatively, be movable together with movable components of the X-ray imaging system. Thereby, flexibility is still higher than with fixed-position imaging devices (e.g. cameras), yet there are more positional constraints, which may reduce computational requirements as compared to entirely independently movable imaging devices.

The present disclosure also provides a computer program product comprising instructions which, when the program is executed by a computer, cause the computer to carry out and/or control the method for use in positioning an anatomy of interest of the present disclosure.

The present disclosure also provides a computer readable medium comprising instructions which, when executed by a computer, cause the computer to carry out and/or control the method for use in positioning an anatomy of interest of the present disclosure.

Further features, examples, and advantages will become apparent from the detailed description making reference to the accompanying drawings.

### BRIEF DESCRIPTION OF THE DRAWINGS

Fig. 1 shows a schematic illustration of a system according to the present disclosure;
Fig. 2 shows a flowchart illustrating an exemplary method for use in positioning an anatomy of interest for X-ray imaging according to the present disclosure;
Fig. 3 shows a flowchart illustrating an exemplary method for positioning an anatomy of interest for X-ray imaging according to the present disclosure;
Fig. 4 shows different views of a leg and foot and illustrates occlusion for different viewing directions;
Figs. 5a and 5b show examples obtaining 3D surface data from different viewing directions using one or more imaging devices.

### DETAILED DESCRIPTION OF EMBODIMENTS

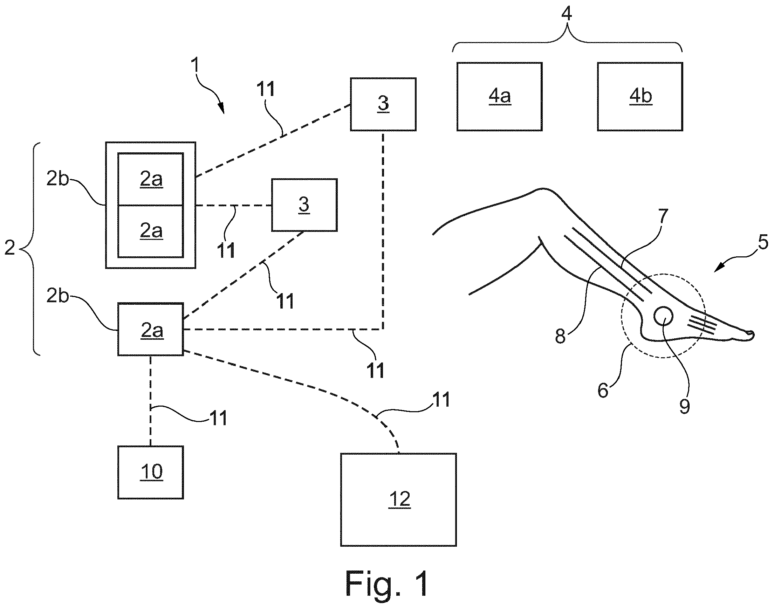

Fig. 1 illustrates a schematic representation of an X-ray system according to the present disclosure.

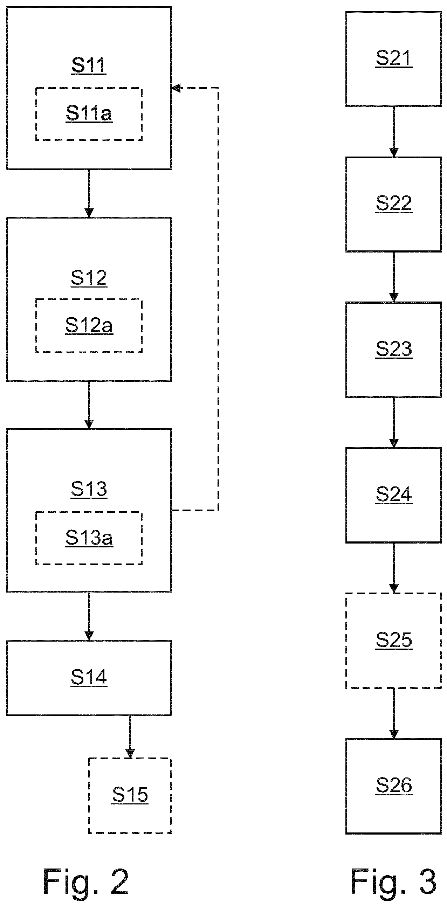

The X-ray system 1 comprises a data processing system 2 according to the present disclosure, the data processing system configured to carry out and/or control the steps of any of the methods for use in positioning an anatomy of interest of the present disclosure, for example the methods outlined in the context of Fig. 2 or at least part of the method of Fig. 3. The data processing system may comprise one or more processors 2a. For example, the data processing system may comprise one or more computing devices 2b comprising the one or more processors.

The X-ray imaging system further comprises one or more imaging devices 3 configured to capture the 3D surface image data, for example at least one depth camera configured to capture the 3D surface image data.

As an example, if there is only one imaging device, the imaging device may be configured to be automatically movable along a trajectory so as to image the anatomy of interest from different viewing directions. Alternatively, multiple imaging devices, for example two imaging devices, may be provided. The imaging devices may then have mutually different viewing directions. The imaging devices may be fixed-position imaging devices.

The X-ray system, in this example, further comprises an X-ray device 4, which may comprise an X-ray source 4a and an X-ray detector 4b, for example.

It is noted that, as an example (not shown here), at least one of the imaging devices, e.g. a depth camera, may be attached to or part of the tube head of the X-ray device.

Fig. 1, merely for the sake of illustration and not part of the X-ray system, also illustrates a body part 5, including leg and foot in this example. An anatomy of interest is denoted by reference sign 6. In this example, the anatomy of interest is an ankle. Different anatomical structures 7, 8, and 9 are illustrated, in this example, i.e., the tibia, the fibula, and the calcaneus. The relative arrangement between subsets of the anatomical structures may define the pose of the anatomy of interest.

Surface image data does not allow to directly view the different anatomical structures and their arrangement, such that determining the pose by means of surface image data is an indirect method for determining pose. A direct method would require other imaging modalities, for example X-ray. However, as the purpose of the positioning is to allow for positioning the anatomy of interest prior to X-ray imaging, the method of the present disclosure employs an indirect method based on surface image data.

As shown in Fig. 1, optionally, the X-ray system may comprise or be in data communication with a data storage device 10. Moreover, optionally, different parts of the X-ray system may be connected with each other by means of data connections 11, allowing for data exchange, for example, exchange of captured image data and/or exchange of data to be rendered on a display device.

The X-ray imaging system may further comprise or be connected to a display device 12 that may be prompted to output a visual representation of the pose.

In Fig. 2, a flowchart illustrates an exemplary method for use in positioning an anatomy of interest for X-ray imaging according to the present disclosure.

In step S11, 3D surface image data of an anatomy of interest is obtained prior to X-ray imaging.

Step S11 may comprise step S 11a of obtaining 3D surface image data for a plurality of viewing directions. For example, at least one 3D surface imaging device, like a depth camera or any other suitable imaging device, may be used to capture image data from different viewing directions.

For example, 3D surface image data may be captured by means of a plurality of imaging devices having mutually different viewing directions. Alternatively or in addition 3D surface image data may be captured by means of a 3D surface imaging device being moved so as to capture image data from a plurality of different viewing directions, e.g., by moving the imaging device and sequentially capturing 3D surface image data at different positions of the imaging device. Optionally, the movement of the imaging device is controlled and/or tracked in such a manner that each set of 3D surface image data is associated with the respective viewing direction at which it was captured.

As an example, for at least a first viewing direction of the different viewing directions, a portion of the anatomy of interest may be occluded when viewed from said viewing direction. The method may comprise obtaining surface image data from a different second viewing direction of the different viewing directions comprising image data of the portion of the anatomy of interest that is occluded when viewed from the first viewing direction. That is, a second viewing direction may be selected so as to be able to image at least part of the occluded portion of the anatomy of interest. As such, the first and second viewing directions allow for obtaining surface image data that complement each other. This allows for creating a particularly accurate 3D scene from 3D surface image data.

Thus, obtaining 3D surface image data may comprise capturing 3D surface image data may by means of one or more imaging devices. An imaging device attached to an X-ray tube head or detector or being an onboard camera of an X-ray tube head or detector may be used. Such an imaging device may, in particular, be movable together with the X-ray tube head or detector. Alternatively or in addition, an independently movable imaging device may be used.

A fixed-position imaging device may also be used in combination with another imaging device, e.g. another fixed-position imaging device or a movable imaging device. The position may be fixed relative to a room, a patient couch, or a user / person carrying out the positioning, e.g. a clinical practitioner.

Moreover, in order to obtain images from different viewing directions, obtaining the 3D image data may comprise changing the pose of the anatomy of interest to obtain multiple views thereof. This may, for example, provide supplementary image data for creating the scene, creating a model, and/or resolving uncertainties.

In step S12, a 3D scene of a surface of the anatomy of interest is generated from the 3D surface image data. Step S12 may comprise step S 12a of aggregating 3D surface image data for a plurality of viewing directions. For example, the data aggregated in step S 12a may comprise the 3D surface image data obtained in step S11a. As outlined above, this allows for creating a particularly accurate 3D scene.

Generating the 3D scene of the surface of the anatomy of interest from the 3D surface image data may leverage deep learning 3D scene reconstruction, in particular based on photogrammetry. This is particularly suitable in the context of the present method, particularly to handle the complexity with high accuracy. In principle, however, generating 3D scenes may be also carried out with any suitable method known to the skilled person.

Generating the 3D scene may, for example, comprise synthesizing image data representative of the 3D scene.

In step S13, a pose of the anatomy of interest is determined from the 3D scene. As an example, step S13 may comprise optional step S13a of aligning a, particularly dynamic, 3D anatomical model of at least part of a skeleton with the 3D scene of the surface of the anatomy of interest and, based thereon, inferring the pose.

Determining the pose may be performed taking into account arrangement of the surface of the anatomy of interest relative to the arrangement of the X-ray tube head and/or relative to the arrangement of the detector and/or relative to the arrangement of the patient couch and/or detector. Such a relative arrangement may be determined based on image data captured together with the 3D surface image data of the anatomy of interest, as in many cases said elements will also be captured in the images due to the imaging device's field of view (FOV).

Alternatively or in addition, determining the pose may also comprise using fiducial markers and/or using other aids, particularly visual aids, supporting identification of anatomical landmarks in the 3D surface image data. Placing visual aids on the anatomy of interest is particularly advantageous, as they will then be captured together with the anatomy of interest during capturing of the image data.

Determining the pose may be performed taking into account a previously obtained 3D surface model of the anatomy of interest. For example, matching the 3D surface of the scene with the 3D surface model may allow for determining the pose.

The method further comprises, in step S14, causing an output of a visual representation of the pose on a display device. For example, one or more signals may be generated and output, the signals configured to prompt a display device to output the visual representation. The visual output may support a user, for example a clinical technician in positioning the anatomy of interest. As an example, the visual representation of the pose image data may comprise a synthetic X-ray image generated from a 3D bone model based on the pose.

The previously described steps may be carried out only once or repeatedly, particularly continuously. In the latter case, a tracking function may be provided, i.e., changes in pose may be tracked.

Optionally, in step S15, a visualization of a target pose may be output on the display device, for example as an overlay or side-by-side with the visual representation of the actual pose.

The above steps may be carried out not only after, but also again during X-ray imaging. Thus, pose can be monitored and checked at the time of X-ray imaging to detect problems immediately.

In Fig. 3, a flowchart illustrates an exemplary method for positioning an anatomy of interest for X-ray imaging according to the present disclosure.

In step S21, 3D surface image data of an anatomy of interest is obtained prior to X-ray imaging, for example as explained in the context of step S11.

In step S22, a 3D scene of a surface of the anatomy of interest from the 3D surface image data is generated, for example as explained in the context of step S12.

In step S23, a pose of the anatomy of interest is determined from the 3D scene, for example as explained in the context of step S13. The pose may also be referred to as the "actual pose".

In step S24, output of a visual representation of a pose on a display device is caused, for example as explained in the context of step S14.

Optionally, in step S25, a visualization of a target pose may be output on the display device, for example as an overlay or side-by-side with the visual representation of the actual pose.

In step S26, a user positions the anatomy of interest for X-ray imaging based on the output of the visual representation of the pose. For example, a user may position the anatomy of interest in such a manner that the visualization of the actual pose matches the visualization of a target pose.

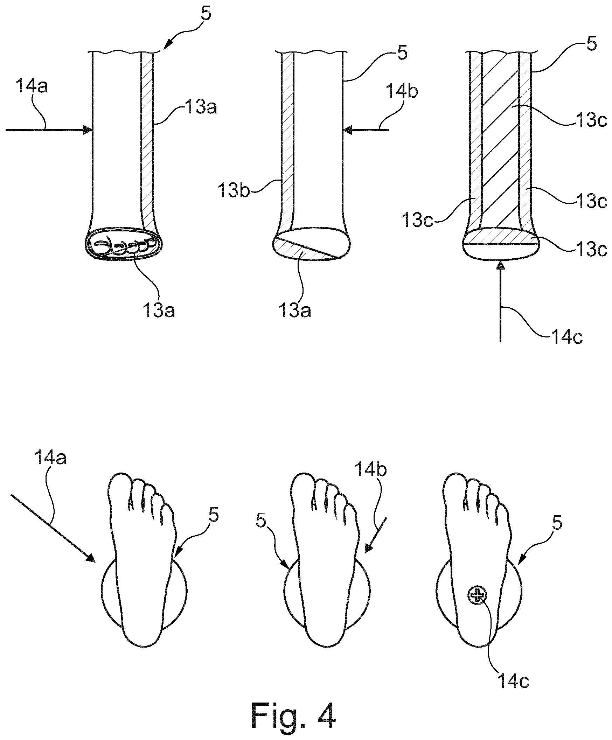

In Fig. 4, different views of a leg and foot are shown. The hatched areas 13a, 13b, 13c indicate exemplary surface areas that are occluded when viewed from viewing directions 14a, 14b, and 14c, respectively.

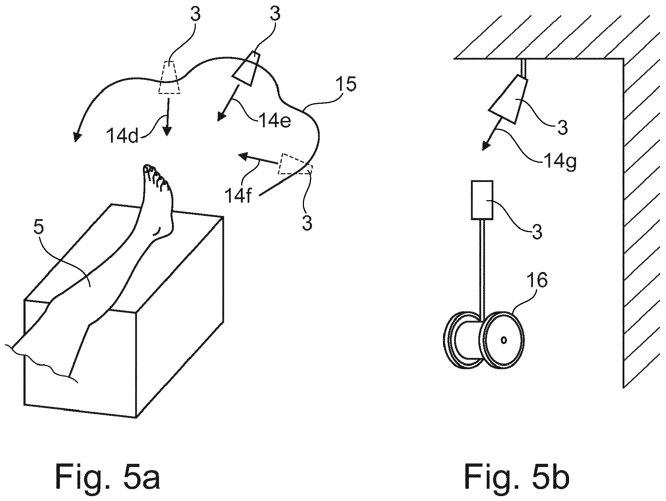

Using 3D surface image data obtained from said different viewing directions in isolation will yield low accuracy when determining a pose. However, a scene that is determined on the bases of the 3D surface image data from more than one of the viewing directions will allow for improving accuracy. As an example, an almost complete 3D model of the surface may be built by combining 3D surface image data from different viewing directions, which may serve as a basis for pose detection, as outlined above. Figs. 5a and 5b illustrate setups that allow for obtaining 3D surface image data from different viewing directions.

In Fig. 5a, an imaging device in the form of a single depth camera 3 is moved along a trajectory 15 and captures 3D surface image data at various positions along the trajectory, and, accordingly, with different viewing directions. A movable camera may, for example, also be attached to an X-ray tube head.

In Fig. 5b, a camera is mounted on a ceiling and has a fixed viewing direction 14g. A second camera is mounted on a vehicle 16, which is movable on wheels and carries the camera on a support rod. Thus, the vehicle may move the camera into different positions to allow for different viewing directions. An advantage of such a configuration is the high flexibility. Providing imaging devices in a fixed position, on the other hand, allows for less computationally expensive data processing, as the position and viewing direction are pre-defined.

Further examples and advantages are outlined in the following.

A single depth camera at a fixed position may be useful for positioning a patient, however the patient positioning for musculoskeletal X-ray images requires high precision. Objects, in particular the patient's anatomy of interest, usually block the line of sight of the camera which leads to uncertainties in the pose estimation, as the conditions in the occluded regions are unknown. As an example, if the joint axis is perpendicular to the central beam (i.e., ankle anterior-posterior (AP) projection) it is challenging to estimate the flexion of the joint.

Providing a scene as described above alleviates this problem. For example, this may entail observing the patient before and optionally during the positioning for X-ray using (depth) camera(s) providing multiple point of views onto the patient's surface. Using additional data as compared to only a single-view image, the accuracy of prospective X-ray can be improved. The method may employ deep learning 3D scene reconstruction from sparse images (which offers near real time runtime instead of slower classical photogrammetry). Alternatively or in addition, it may employ inferring the anatomic human skeletons in dynamic poses from the 3D body surface observation alone.

When employing the method of the present invention, it is possible to improve the pose estimation of a patient, particularly relative to the X-ray tube and detector, for the prospective X-ray which can be achieved by generating a 3D scene, thereby reducing the occulated regions around a patient's anatomy of interest. For example, this may be achieved by observing the patient before and optionally during the positioning for X-ray using (depth) camera(s) provides multiple point of views onto the patient's surface. The method of the present disclosure may comprise aggregating and synthesizing this data. This may also support the alignment of a 3D anatomical model which improves the accuracy for prospective X-ray.

The method of the present disclosure may comprise, as an example, continuously tracking and scanning the patient during the whole patient positioning phase before X-ray image acquisition. This provides novel views onto the patient from different perspectives because the patient and the tube head are moving. This is also schematically illustrated in Fig. 5a.

A detailed example of processing the 3D surface image data according to the present disclosure is provided in the following.

When the patient is approaching the camera's FOV, a 3D model of the patient's surface is being generated from a generic human 3D model including bones and musculoskeletal constraints.

A 3D scene representation can be achieved using photogrammetry alignment using machine learning algorithms that provide near real time runtimes.

Additionally, techniques that support the alignment of a 3D model with internal skeleton may be employed.

If a 3D model is available from previous exams, it may be loaded and further refined. Even though the joints are still moving, an elastic patient model can then track relative to the X-ray tube and detector. The detector with its well-known shape may be tracked as well to complete the pose estimation.

The outline of the patient's surface, e.g. the skin or a cast or clothes are known when the patient positioning is completed, and a broad range of geometrical constraints are known for regions that would have been occluded otherwise.

Before the actual X-ray image is acquired, a prospective synthetic X-ray preview image may be displayed to the radiographer for quality control, alongside with image quality metrics that summarize if the positioning is correct. Alternatively, a life preview may be shown at a screen and can be used for direct patient positioning.

Further aspects of the methods and systems of the present disclosure are provided in the following.

A patient may be equipped with fiducial markers to assists the pose determination, particularly, to assist tracking and 3D model building. Fiducial markers may be attached to the skin or by wearing a tight sleeve, for example.

A patient may be instructed to present different views of the surface of the anatomy of interest, for example by turning the full body or parts thereof.

A tube head with an onboard mounted camera may observe the patient from different perspectives by moving automatically along an optimal trajectory that reduces occluded regions.

Alternatively or in addition, one or more (depth) cameras may be provided, e.g., cameras fixed relative to the room, fixed relative to the X-ray tube, or fixed relative to the radiographer (e.g. virtual or mixed reality goggles), and/or fixed relative to the corners of the patient couch, as some nonlimiting examples.

Alternatively or in addition, one or more (depth) cameras that are movable/flexible in the room to observe the patient's anatomy from an ideal angle may be provided.
A robot-based camera, optionally having a self-positioning function to minimize occluded areas, may be used for capturing 3D surface image data.

Alternatively or in addition, one or more (depth) cameras may be attached to or incorporated in the detector.

It has been mentioned above that fiducial markers may be used to support the process of pose detection. Alternatively or in addition, palpation information may be collected and used in the pose estimation. To that end, the patient or another person may be instructed to touch bony landmarks. This may, for example, be used to refine pose estimation, e.g., reduce pose estimation uncertainty. The choice of landmarks may be based on the problem at hand, for example on a specific pose estimation uncertainty to be addressed,

Structured light may be used for obtaining 3D surface image data.

A rendering of the 3D model of the patient's anatomy of interest may be used to communicate proposed positioning updates. For example, flexing the foot could be indicated by morphing the 3D model accordingly.

In another exemplary embodiment of the present disclosure, a computer program or a computer program product is provided, the computer program (product) comprising instructions which, when the program is executed by a computer, cause the computer to carry out and/or control the method according to one of the preceding embodiments, e.g., on an appropriate system.

The computer program (product) might be stored on a computing unit, which might also be part of an embodiment of the present invention, e.g. the data processing system described previously. This computing unit may be adapted to perform or induce a performing of the steps of the method described above. Moreover, it may be adapted to operate components of the above-described system. The computing unit can be adapted to operate automatically and/or to execute the orders of a user.

A computer program (product) may be loaded into a working memory of a data processor. The data processor may thus be equipped to carry out the method of the invention.
Further on, the computer program (product) might be able to provide all necessary steps to fulfill the procedure of an exemplary embodiment of the method as described previously.

According to a further exemplary embodiment of the present invention, a computer readable medium, such as a CD-ROM, is presented, wherein the computer readable medium comprises instructions which, when executed by a computer, cause the computer to carry out and/or control the method according to one of the preceding embodiments. For example, the computer program (product) might be stored on the computer readable medium.

A computer program (product) may be stored and/or distributed on a suitable medium, such as an optical storage medium or a solid-state medium supplied together with, or as part of other hardware, but may also be distributed in other forms, such as via the internet or other wired or wireless telecommunication systems.

However, the computer program (product) may also be presented over a network like the World Wide Web and can be downloaded into the working memory of a data processor from such a network.

According to a further exemplary embodiment of the present invention, a medium for making a computer program(product) available for downloading is provided, which computer program (product) is arranged to perform a method according to one of the previously described embodiments.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

**LIST OF REFERENCE SIGNS:**

| X-ray system 1 | |
|---|---|
| Data processing system | 2 |
| Processors | 2a |
| Computing devices | 2b |
| Imaging device(s) | 3 |
| X-ray device | 4 |
| X-ray source | 4a |
| X-ray detector | 4b |
| Body part | 5 |
| Anatomy of interest | 6 |
| First anatomical structure | 7 |
| Second anatomical structure | 8 |
| Third anatomical structure | 9 |
| Data storage device | 10 |
| Data connections | 11 |
| Display device | 12 |
| Occluded surface portions | 13a, 13b, 13c |
| Viewing directions | 14a, 14b, 14c, 14d, 14e, 14f, 14g |
| Trajectory | 15 |
| Vehicle | 16 |
| Steps | S11 to S15 |
| Steps | S21 to S26 |

## Claims

1. A method for use in positioning an anatomy of interest for X-ray imaging, the method comprising:
obtaining (S11, S21) 3D surface image data of an anatomy of interest prior to X-ray imaging;
generating (S12, S22) a 3D scene of a surface of the anatomy of interest from the 3D surface image data;
determining (S13, S23) a pose of the anatomy of interest from the 3D scene; and
causing (S14, S24) an output of a visual representation of the pose on a display device.

2. The method of claim 1,
wherein obtaining the 3D surface image data comprises obtaining 3D surface image data for a plurality of viewing directions, and wherein generating the 3D scene comprises aggregating the 3D surface image data for the plurality of viewing directions.

3. The method of claim 2, wherein obtaining 3D surface image data for a plurality of viewing directions comprises
capturing 3D surface image data by means of a plurality of 3D surface imaging devices having mutually different viewing directions, and/or
capturing 3D surface image data by means of a single 3D surface imaging device or multiple 3D surface imaging devices, wherein the single 3D surface imaging device or at least one of the multiple 3D surface imaging devices are moved so as to capture image data from a plurality of viewing directions.

4. The method of any of the preceding claims,
wherein obtaining 3D surface image data of the anatomy of interest prior to X-ray imaging comprises obtaining surface image data of the anatomy of interest from a first viewing direction and from at least one second viewing direction, and
wherein the surface image data obtained from the second viewing direction comprises image data of a portion of the anatomy of interest that is occluded when viewed from the first viewing direction.

5. The method of any of any of the preceding claims,
wherein generating the 3D scene of the surface of the anatomy of interest from the 3D surface image data leverages deep learning 3D scene reconstruction, in particular based on photogrammetry, and/or
wherein determining the pose of the anatomy of interest from the 3D scene comprises aligning a, particularly dynamic, 3D anatomical model of at least part of a skeleton with the 3D scene of the surface of the anatomy of interest and, based thereon, inferring the pose.

6. The method of any of the preceding claims,
wherein determining the pose is performed taking into account arrangement of the surface of the anatomy of interest relative to the arrangement of the X-ray tube head and/or relative to the arrangement of the detector and/or relative to the arrangement of the patient couch and/or detector, which is/are optionally determined based on image data captured together with the 3D surface image data of the anatomy of interest, and/or
wherein determining the pose comprises using fiducial markers and/or using other aids, particularly visual aids, supporting identification of anatomical landmarks in the 3D surface image data, and/or
wherein determining the pose is performed taking into account a previously obtained 3D surface model of the anatomy of interest.

7. The method of any of any of the preceding claims,
wherein generating the 3D scene comprises synthesizing image data representative of the 3D scene.

8. The method of any of any of the preceding claims, wherein the visual representation of the pose image data comprises a synthetic X-ray image generated from a generic 3D bone model based on the pose.

9. The method of any of the preceding claims, wherein obtaining 3D surface image data comprises capturing 3D surface image data
by means of an imaging device attached to an X-ray tube head or being an onboard camera of an X-ray tube head, particularly a movable imaging device movable together with the X-ray tube head, and/or
by means of an imaging device attached to an X-ray detector or being an onboard camera of an X-ray detector, and/or
by means of a movable imaging device, and/or
by means of a fixed-position imaging device, particularly being in a fixed position relative to a room, a patient couch, or a user carrying out the positioning, and/or
for different poses of the anatomy of interest to obtain multiple views thereof.

10. The method of any of the preceding claims,
wherein the steps of obtaining the 3D surface image data, generating the 3D scene, determining the pose, and causing the output are carried out, particularly continuously, prior to and/or during positioning of the anatomy of interest, and/or
wherein the steps of obtaining the 3D surface image data, generating the 3D scene, determining the pose, and causing the output are repeated during X-ray imaging.

11. A method for positioning an anatomy of interest for X-ray imaging, the method comprising the method of any of the preceding claims and further comprising a user positioning (S26) the anatomy of interest for X-ray imaging based on the output of the visual representation of the pose.

12. A data processing system (2) for use in positioning an anatomy of interest for X-ray imaging, the data processing system configured to carry out and/or control the steps of any of claims 1 to 10.

13. An X-ray system (1) comprising the data processing system (2) of claim 12 and further comprising one or more imaging devices (3) configured to capture the 3D surface image data, in particular at least one depth camera configured to capture the 3D surface image data, and the X-ray system optionally comprising an X-ray imaging device (4) having an X-ray source (4a) and an X-ray detector (4b).

14. Computer program product comprising instructions which, when the program is executed by a computer, cause the computer to carry out and/or control the method of any one of claims 1 to 10.

15. A computer readable medium comprising instructions which, when executed by a computer, cause the computer to carry out and/or control the method of any one of claims 1 to 10.
